# EUROPÄISCHE PATENTSCHRIFT

(11) **EP 1 310 033 B1**
(45) Veröffentlichungstag und Bekanntmachung des Hinweises auf die Patenterteilung: **06.01.2010**
(21) Anmeldenummer: 00945538.7
(22) Anmeldetag: 19.05.2000
(51) Int. Cl.: H02J 7/00

(54) **SCHALTUNGSANORDNUNG ZUM SCHUTZ EINER BATTERIE VOR TIEFENTLADUNG**
CIRCUIT ARRANGEMENT FOR PROTECTING A BATTERY FROM EXHAUSTIVE DISCHARGE
CIRCUIT POUR PROTEGER UNE BATTERIE DE DECHARGES TOTALES

(43) Veröffentlichungstag der Anmeldung: 14.05.2003
(73) Patentinhaber: Infineon Technologies AG, 81669 München (DE)
(72) Erfinder: WALTENBERGER, Helmut, D-82041 Deisenhofen (DE)
(74) Vertreter: Bickel, Michael
(86) Internationale Anmeldenummer: PCT/DE2000/001617
(87) Internationale Veröffentlichungsnummer: WO 2001/089056

(56) Entgegenhaltungen:
- EP-A- 0 240 883
- US-A- 5 173 653
- US-A- 5 890 780
- US-A- 6 052 016

## Beschreibung

Die Erfindung betrifft eine Schaltungsanordnung zum Schutz einer Batterie vor Tiefentladung.

Derartige Schaltungsanordnungen sind bereits in vielfältigen Ausgestaltungen bekannt (z. B. US 5 890 780). Gemeinsam ist den bekannten Schaltungsanordnungen jedoch, dass sie parallel zur Batterie geschaltet werden, um die Spannung über der Batterie zur Erkennung der Entladeschlussbedingung abgreifen zu können. Um zudem auch bei Erfüllen der Entladeschlussbedingung ein Abschalten einer an der Batterie angeschlossenen Last durch die Schaltungsanordnung zu ermöglichen, benötigt diese mindestens drei Anschlüsse. Geräte ohne Tiefentladeschutz können daher nur nachgerüstet werden, wenn sie mit relativ hohem Aufwand umgebaut werden. Darüber hinaus ist es mit den bisherigen dreipoligen Schaltungsanordnungen schwierig, bereits bestehende Geräteserien entsprechend abzuändern.

Aufgabe der Erfindung ist es daher, eine Schaltungsanordnung zum Schutz einer Batterie vor Tiefentladung anzugeben, welche ein einfaches Nachrüsten bestehender Geräte bzw. ein Anpassen von bestehenden Geräteserien ohne größeren zusätzlichen Aufwand erlaubt.

Die Aufgabe wird gelöst durch eine Schaltungsanordnung gemäß Patentanspruch 1. Ausgestaltungen und Weiterbildungen des Erfindungsgedankens sind Gegenstand von Unteransprüchen.

Die erfindungsgemäße Schaltungsanordnung zeichnet sich vor allem durch einen zweipoligen Aufbau aus, der eine simple Serienschaltung zu Batterie und Last erlaubt und daher ohne größeren Aufwand in den meisten Geräten fest installiert oder durch Zwischenlegen an elektrischen Kontakten installiert werden kann. Die Erfindung wendet sich vor allem im wesentlichen an ohmsche Verbraucher, wie beispielsweise Glühlampen. Im besonderen Maße eignet sich die Erfindung daher für Taschenlampen, bei denen sich aus Ökonomie- und/oder Ökologiegründen ein Betrieb mit Akkumulatoren anbietet. Denn namhafte Taschenlampenhersteller empfehlen ausdrücklich, keine Akkus einzusetzen, da bei nicht rechtzeitig abgeschalteten Taschenlampen die Glühlampen die Akkumulatoren bis unter die Entladegrenze entladen. Tiefstentladene Akkumulatoren können aber in der Regel nicht mehr erneut geladen werden und sind damit nicht mehr brauchbar. Mit der erfindungsgemäßen Schaltungsanordnung lassen sich bereits in Betrieb befindliche Taschenlampen beispielsweise durch ein die Schaltungsanordnung enthaltendes Einlegeplättchen für das Batteriefach nachrüsten oder aber Serienprodukte ohne weiteres leicht abändern. Die so ausgestatteten Taschenlampen sind damit vollständig für einen Akkubetrieb geeignet. Darüber hinaus ist ein Betrieb mit herkömmlichen Primärzellen statt mit Akkumulatoren in gleicher Weise uneingeschränkt möglich.

Erreicht wird dies durch eine Schaltungsanordnung mit zwei externen Anschlüssen zum Anschließen einer Batterie und einer in Reihe dazugeschalteten Last, bei der zwischen die beiden externen Anschlüsse ein steuerbarer Schalter und dazu parallel eine Reihenschaltung aus einem Energiespeicher und einer in Durchlassrichtung betriebenen Diode geschaltet ist. Eine aus dem Energiespeicher versorgte, mit dem Schalter verbundene Steuerschaltung erzeugt ein Steuersignal in Abhängigkeit von einem Grenzwert und der Spannung über dem Schalter derart, dass der Schalter geöffnet ist bei einer Spannung über dem geöffneten Schalter, die unterhalb des Grenzwertes liegt, und bei einer Spannung über dem geöffneten Schalter, die oberhalb des Grenzwertes liegt, während regelmäßig auftretender, kurzer Zeitintervalle geöffnet, ansonsten aber geschlossen ist.

Bei einer Weiterbildung der Erfindung weist die Steuerschaltung eine Spannungsüberwachungsschaltung zur Erzeugung eines Steuersignals in Abhängigkeit von dem Grenzwert und der Spannung über dem Schalter sowie eine Impulsgeneratorschaltung zum Erzeugen regelmäßig auftretender, kurzzeitiger Impulse auf, wobei Spannungsüberwachungsschaltung und Impulsgeneratorschaltung derart ausgebildet und mit dem Schalter gekoppelt sind, dass der Schalter geöffnet ist bei einer Spannung über dem geöffneten Schalter, die unterhalb des Grenzwertes liegt, und bei einer Spannung über dem geöffneten Schalter, die oberhalb des Grenzwertes liegt, während regelmäßig auftretender, kurzer Zeitintervalle geöffnet, ansonsten aber geschlossen ist.

Als Energiespeicher kann bei einer bevorzugten Ausführungsform ein Hilfsakkumulator (zum Beispiel Polymerakkumulator, Polymerfolienbatterie etc.) und als Ladeeinrichtung eine Schalteinrichtung vorgesehen werden, wobei die Schalteinrichtung den Akkumulator zum Laden auf die Batterie aufschaltet, ansonsten aber Batterie und Hilfsakkumulator trennt.

Bei einer dazu alternativen Ausführungsform wird als Energiespeicher ein Kondensator und als Ladeeinrichtung eine Diode verwendet. Dabei wird die Diode derart geschaltet, dass die Diode durchlässig ist, wenn die Spannung über dem Schalter größer ist als die Spannung über dem Kondensator, und ansonsten gesperrt ist. Die Spannung über dem Schalter wird vorzugsweise unter Zwischenschaltung der Diode ermittelt.

Bei einer demgemäßen bevorzugten Ausführungsform einer erfindungsgemäßen Schaltungsanordnung weist die Steuerschaltung einen dem Kondensator parallel geschalteten Spannungsteiler mit einem Abgriff auf. Dabei ist die gesteuerte Strecke eines ersten Transistors zwischen den Steueranschluss des Schalters und einen Anschluss des Kondensators geschaltet. Die gesteuerte Strecke eines zweiten Transistors ist zwischen den Steueranschluss des ersten Transistors und den anderen Anschluss des Kondensators geschaltet, wobei dessen Steueranschluss mit dem Abgriff des Spannungsteilers verbunden ist. Schließlich ist ein Widerstand zwischen den Abgriff des Spannungsteilers und den Steueranschluss des Schalters geschaltet. Vorteil dieser Ausführungsform ist es, dass der Kondensator sowohl zur Energiespeicherung für den Betrieb der gesamten Schaltungsanordnung als auch als Teil eines Zeitglieds für die Erzeugung der Impulse bildet. Durch diese Doppelnutzung des Kondensators, wird die Größe der Schaltungsanordnung erheblich reduziert, da Kondensatoren einen verhältnismäßig hohen Platzbedarf aufweisen.

Bevorzugt ist ein dritter Transistor als Schalter vorgesehen, wobei vor allen Feldeffekttransistoren geeignet sind, da sie nur geringe Ansteuerströme benötigen und damit der Kondensator mit geringerer Kapazität ausgeführt werden kann, was wiederum zu einem geringeren Platzbedarf führt.

Ist als Last eine Glühlampe mit einem Sockel (wie beispielsweise bei Taschenlampen) vorgesehen, dann kann die Schaltungsanordnung in den Sockel mitintegriert werden. Der Glühkolben kann dabei mit dem Sockel fest verbunden sein oder aber in den Sockel einsteckbar sein. Auf diese Weise können ohne größeren Aufwand akkutaugliche Glühbirnen geschaffen werden.

Alternativ kann die erfindungsgemäße Schaltungsanordnung auch in ein flaches Gehäuse mit einer der Grundfläche des verwendeten Batterietyps entsprechenden Grundfläche eingebaut werden. Dabei können beispielsweise auf den Stirnflächen jeweils Kontaktierungen angebracht sein, welche als die beiden externen Anschlüsse zum Anschließen der Batterie und der Last dienen. Dabei kann das plättchenähnliche Gehäuse in Reihe zu der bzw. den Batterien in das Batteriefach mit eingelegt werden, so dass bereits im Betrieb befindliche Geräte ohne Weiteres nachgerüstet werden können. Schließlich kann der mit der Anzahl der Batteriezellen korrespondierende Grenzwert fest eingestellt, von außen einstellbar oder selbstlernend ausgeführt werden.

Die Erfindung wird nachfolgend anhand der in den Figuren der Zeichnung dargestellten Ausführungsbeispiele näher erläutert. Es zeigt:
- Figur 1: eine erste Ausführungsform einer erfindungsgemäßen Schaltungsanordnung,
- Figur 2: eine zweite Ausführungsform einer erfindungsgemäßen Schaltungsanordnung,
- Figur 3: die Anordnung einer erfindungsgemäßen Schaltungsanordnung in einem flachen Gehäuse,
- Figur 4: die Anordnung einer erfindungsgemäßen Schaltungsanordnung in einem fest mit einem Glühkolben verbundenen Sockel und
- Figur 5: die Anordnung einer erfindungsgemäßen Schaltungsanordnung in einem Sockel mit einem lösbaren Glühkolben.

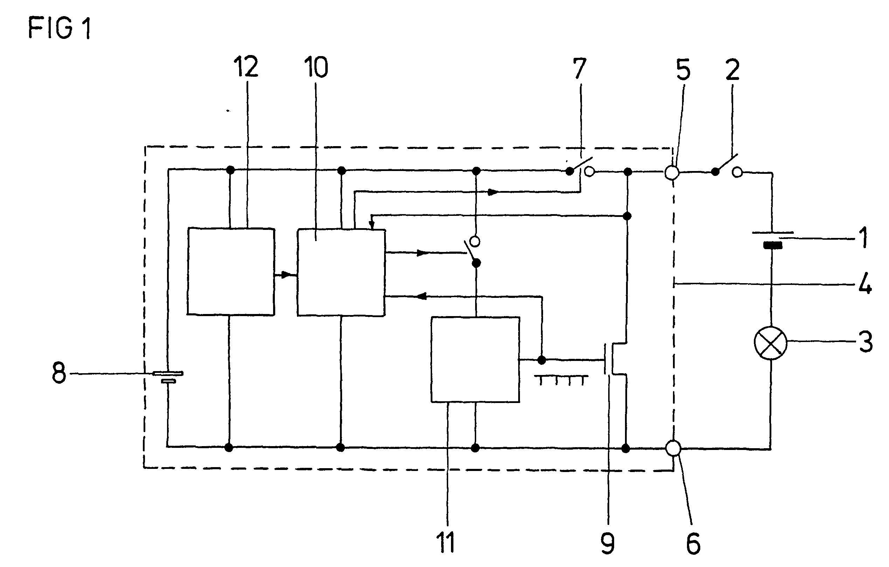

Bei dem in Figur 1 gezeigten Ausführungsbeispiel ist eine Glühlampe 3 unter Zwischenschaltung eines Ein-Aus-Schalters 2 und einer in Reihe dazu liegenden, erfindungsgemäßen, zweipoligen Tiefentladeschutzschaltung 4 an eine Batterie 1 (z. B. einen Nickel-Cadmium-Akkumulator) angeschlossen. Die beiden Pole der Tiefentladeschutzschaltung 4 werden dabei durch Anschlüsse 5 und 6 gebildet, von denen Anschluss 5 beim Ausführungsbeispiel mit dem positiven Pol der Batterie 1 und Anschluss 6 über die Glühlampe 3 an den negativen Pol der Batterie 1 angeschlossen ist.

Bei der Tiefentladeschutzschaltung 4 ist ein Anschluss einer Schalteinrichtung 7 mit dem Anschluss 5 verschaltet, deren anderer Anschluss unter Zwischenschaltung eines als Energiespeicher dienenden Polymerakkumulators 8 mit dem Anschluss 6 der Tiefentladeschutzschaltung 4 verbunden ist. Darüber hinaus ist mit dem Anschluss 5 der Drainanschluss eines als steuerbaren Schalter dienenden NMOS-Feldeffekttransistors 9 verbunden, dessen Sourceanschluss mit dem Anschluss 6 verschaltet ist. Es sind zudem eine Steuerlogik 10 und ein Impulsgenerator 11 vorgesehen, die beide aus dem Polymerakkumulator 8 versorgt werden. Die Versorgung des Impulsgenerators kann zum Zwecke der Steuerung und Energieeinsparung durch die Steuerlogik 10 derart gesteuert werden, dass in geeigneter Weise die Stromzufuhr des Impulsgenerators 11 unterbrochen wird. Die Steuerlogik 10 überwacht dabei die Spannung über der Drain-Source-Strecke des NMOS-Feldeffekttransistors 9 und unterbricht bei Unterschreiten eines bestimmten Grenzwertes die Stromzufuhr des Impulsgenerators 11. Der Impulsgenerator 11 wird dadurch deaktiviert, wodurch der NMOS-Feldeffekttransistor 9 vollständig gesperrt (der Schalter geöffnet) wird. Die Steuerung der Schalteinrichtung 7 und die Ermittlung der Spannung über dem NMOS-Feldeffekttransistor 9 erfolgt beim Ausführungsbeispiel durch die Steuerlogik 10, die dazu mit der Schalteinrichtung 7 und dem Anschluss 5 verbunden ist. Der Grenzwert kann dabei mittels eines Festwiderstandes, eines einstellbaren Widerstandes (beides nicht in der Zeichnung gezeigt) oder aber durch eine selbstlernende Schaltung festgelegt werden.

Eine derartige selbstlernende Schaltung ist beim Ausführungsbeispiel mittels einer Grenzwerteinstelleinrichtung 12 realisiert, welche selbsttätig die Maximalspannung beim Einlegen neuer Batterien ermittelt und speichert und davon abhängig den Grenzwert festlegt. Der von der Grenzwerteinstelleinrichtung 12 vorgegebene Grenzwert, der mit der Anzahl verwendeter Batteriezellen korrespondiert, dient der Steuerlogik 10 als Grundlage für eine Entscheidung, ob die Spannung über dem gesperrtem NMOS-Feldeffekttransistor 9 und damit die Spannung an der Batterie 1 den Grenzwert übersteigt. Um den Zustand des NMOS-Feldeffekttransistors 9 abzufragen, ist die Steuerlogik 10 mit dem Ausgang des Impulsgenerators 11, an dem auch der Gate-Anschluss des NMOS-Feldeffekttransistors 9 angeschlossen ist, verbunden. Der Impulsgenerator 11 liefert, sobald er durch die Steuerlogik 10 aktiviert ist, in regelmäßigen Zeitabständen (z. B. 1 Sekunde) kurze Impulse, (Dauer beispielsweise 1 ms), während denen der NMOS-Feldeffekttransistor 9 gesperrt wird. Beim Ausführungsbeispiel geht dazu der Pegel am Ausgang des Impulsgenerators 11 während der Impulse auf "low", ist aber ansonsten auf "high".

Die Steuerlogik 10 führt beispielsweise einen Spannungsvergleich zwischen der Maximalspannung über Schalter 9 und dem Grenzwert jeweils zum Zeitpunkt der Impulse (low) durch und lässt dabei den Impulsgenerator 11 solange aktiviert, bis die Spannung über dem NMOS-Feldeffekttransistor 9 und damit die Batteriespannung zu einem Impulszeitpunkt unter den Grenzwert fällt. Daraufhin wird der Impulsgenerator 11 deaktiviert und die Steuerlogik geht in einen Betriebsmodus mit geringer Stromaufnahme über. Ein erneutes Starten der gesamten Schaltungsanordnung ist dann nur noch möglich durch ein Ausschalten der Batteriespannung mittels Schalter 2 mit anschließendem erneuten Einschalten oder wechseln der Batterien. Die Ladung des Polymerakkumulators 8 kann dabei beispielsweise beim Einlegen neuer Batterien 1 oder jedes Mal beim Einschalten des Schalters 2 erfolgen.

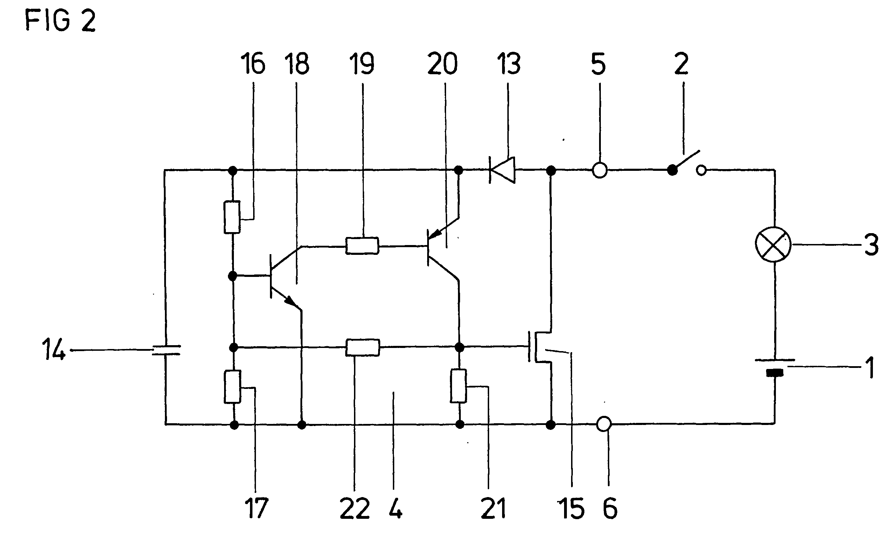

Bei der in Figur 2 gezeigten Ausführungsform ist wiederum die Batterie 1, der in Reihe dazu liegende Schalter 2 und die in Reihe liegende Glühlampe 3 mit einer Tiefentladeschaltung 4' verschaltet, wobei die Tiefentladeschaltung 4' ebenfalls zwei Anschlüsse 5 und 6 aufweist. Am Anschluss 5 ist eine Diode in Durchlassrichtung, nämlich eine Diode 13, ausgehend vom Anschluss 5 unter Zwischenschaltung eines Kondensators 14 mit dem Anschluss 6 gekoppelt. Der Kondensator 14 dient dabei sowohl als Energiespeicher als auch als Teil eines Zeitglieds. Zwischen die Anschlüsse 5 und 6 ist schließlich die Drain-Source-Strecke eines NMOS-Feldeffekttransistors 15 geschaltet.

Parallel zum Kondensator 14 ist ein ohmscher Spannungsteiler mit zwei Widerständen 16 und 17 parallel geschaltet, an dessen Abgriff die Basis eines Bipolartransistors 18 vom npn-Typ angeschlossen ist. Dessen Emitter ist dabei mit dem Anschluss 6 verschaltet und dessen Kollektor ist unter Zwischenschaltung eines Widerstands 19 mit der Basis eines Bipolartransistors 20 vom pnp-Typ verbunden, dessen Emitter über die Diode 13 mit dem Anschluss 5 und dessen Kollektor über einen Widerstand 21 an dem Anschluss 6 angeschlossen ist. Der Kollektor des Bipolartransistors 20 ist zudem über einen Rückkopplungswiderstand 22, der ein schnelles Umschalten unterstützt und bevorzugt hochohmig ausgeführt ist, mit der Basis des Bipolartransistors 18 sowie dem Gate-Anschluss des NMOS-Feldeffekttransistors 15 verbunden. Bei dieser Anordnung sind anders als in Figur 1 vorteilhafterweise mehrere Funktionsblökke miteinander verschmolzen zu einer wenig Einzelelemente aufweisenden Schaltung, bei der einzelne Elemente wie beispielsweise der Kondensator 14 oder die Bipolartransistoren 18 und 20 Doppelfunktionen ausführen.

Eine erfindungsgemäße Schaltungsanordnung wird bevorzugt in ein plättchenförmiges Gehäuse 23 mit zwei Kontaktflächen 24 und 25,welche beispielsweise die Anschlüsse 5 und 6 nach Figur 1 bzw. 2 bilden, eingebaut derart, dass die Schaltungsanordnung außer einem Kondensator 26 in einen integrierten Schaltkreis 27 integriert ist. Die Grundfläche des Gehäuses entspricht dabei der Grundfläche des verwendeten Batterietyps wie beispielsweise der Grundfläche einer Mignon-, Baby- und Monozelle. Das Plättchen wird dabei in den Batteriehalter mit eingelegt und somit in den Stromkreis zwischen Batterie und Glühlampe eingefügt.

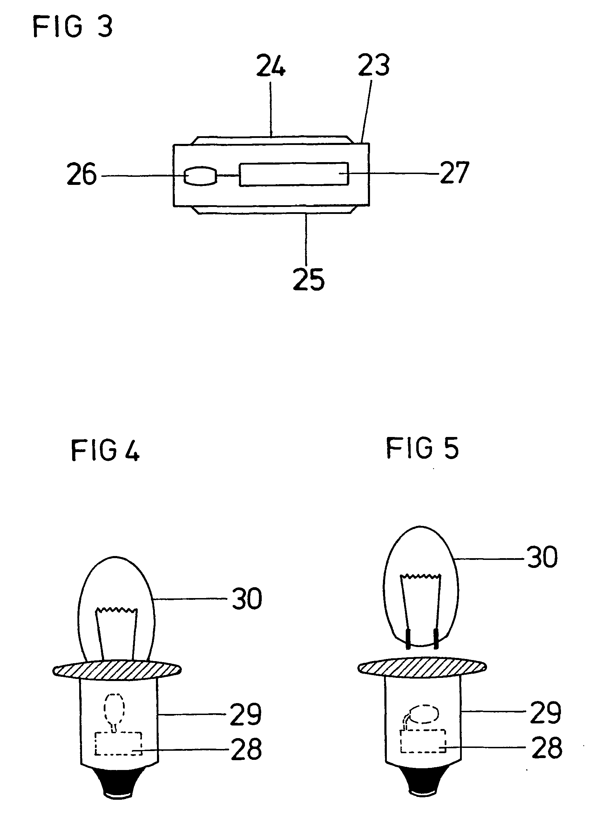

Alternativ kann eine erfindungsgemäße Schaltungsanordnung 28 auch in einen Glühlampensockel 29 eingebaut sein, wobei der Glühlampensockel 29 entweder fest mit einem evakuierten Glühlampenkolben (Figur 4) verbunden sein oder aber als Steckfassung für den evakuierten Glühlampenkolben 30 dienen (Figur 5) kann.

Die Funktionsweise der erfindungsgemäßen Schaltungsanordnung beruht darauf, dass sie weitgehend niederohmig stromdurchlässig ist. Dadurch brennt die Glühlampe mit voller Stärke. In regelmäßigen Abständen (beispielsweise 1 Sekunde) unterbricht die Schaltungsanordnung für einen kurzen Moment (beispielsweise im ms-Bereich) den Stromfluss. In dieser Zeit misst die Schaltungsanordnung über die Glühlampe die Spannung der Batterie (des Akkumulators). Die Messung selbst ist hochohmig und wird somit durch den Innenwiderstand von Glühlampe und Batterie (Akkumulator) kaum verfälscht. Die erfindungsgemäße Schaltungsanordnung nach Figur 2 verharrt im hochohmigen Zustand bis die gemessene Spannung zumindest der vorgegebenen Grenzspannung entspricht. Danach schaltet sie wieder für die vorbestimmte Zeit (z. B. 1 Sekunde) durch.

Bei ausreichender Batteriespannung, also bei einem ausreichend geladenen Akkumulator ist diese Messzeit (= Ausschaltzeit) so kurz, dass der Anwender wegen der Trägheit der Glühwindel nichts bemerkt. Nähert sich der Akkumulator seiner Entladegrenze, verlängern sich bei der Schaltungsanordnung nach Figur 2 galoppierend die Ausschaltphasen (= die Verzögerung bis zum Erholen der Akkumulatorspannung). Der Anwender wird jetzt durch kurze rhythmische Aussetzer auf das nahende "Ende" der Energiereserven aufmerksam gemacht. Lässt man die Lampe trotzdem bewusst eingeschaltet, erreicht man bei stetig länger werdenden Dunkelphasen ein "erwünschtes" vollständiges Entladen des Akkumulators. Somit wird obendrein beispielsweise auch der unerwünschte Memory-Effekt von NiCd-Akkumulatoren verhindert.

Beim Einsatz als Plättchen könnte die erfindungsgemäße Schaltungsanordnung als kleine runde Leiterplatte realisiert werden, die mit einem integrierten Schaltkreis und einen Kondensator in SMD-Technik bestückt wird. Mit SMD-Komponenten kann der freie Platz rings um den Batteriepol verschiedener Batteriezellen (Mignon, Baby, Mono) und verschiedener Zelltypen (z. B. NiCd, NiMH etc.) genützt werden. Eine Anpassung an den jeweiligen Batteriedurchmesser kann dabei durch Plastikadapterringe erfolgen, in die die kleine Leiterplatte eingeklipst wird.

### Bezugszeichenliste

- 1: Batterie
- 2: Ein-Aus-Schalter
- 3: Glühlampe
- 4: Tiefentladeschutzschaltung
- 4': Tiefentladeschutzschaltung
- 5: Anschluss
- 6: Anschluss
- 7: Schalteinrichtung
- 8: Polymerakkumulator
- 9: NMOS-Feldeffekttransistor
- 10: Steuerlogik
- 11: Impulsgenerator
- 12: Grenzwerteinstellung
- 13: Diode
- 14: Kondensator
- 15: NMOS-Feldeffekttransistor
- 16: Widerstand
- 17: Widerstand
- 18: Bipolartransistor
- 19: Widerstand
- 20: Bipolartransistor
- 21: Widerstand
- 22: Widerstand
- 23: Gehäuse
- 24: Kontaktfläche
- 25: Kontaktfläche
- 26: Kondensator
- 27: Integrierter Schaltkreis
- 28: Schaltungsanordnung
- 29: Glühlampensockel
- 30: Glühlampensockel

## Patentansprüche

1. Schaltungsanordnung zum Schutz einer Batterie vor Tiefentladung mit
zwei externen Anschlüssen (5, 6) zum Anschließen einer Batterie (1) und einer in Reihe dazu geschalteten Last (3),
einem zwischen die beiden externen Anschlüsse (5, 6) geschalteten steuerbaren Schalter (9, 15),
einer zwischen die beiden externen Anschlüsse (5, 6) und parallel zum steuerbaren Schalter (9, 15) geschalteten Reihenschaltung aus einem Energiespeicher (8, 14) und einer Ladeeinrichtung (7, 13) für den Energiespeicher (8, 14), und
einer aus dem Energiespeicher (8, 14) versorgten, mit dem Schalter (9, 15) verbundenen Steuerschaltung (11; 16 bis 22) zur Erzeugung eines Steuersignals in Abhängigkeit von einem Grenzwert und der Spannung über dem Schalter (9, 15) derart,
dass der Schalter (9, 15) geöffnet ist bei einer Spannung über dem geöffneten Schalter (9, 15), die unterhalb des Grenzwertes liegt, und bei einer Spannung über dem geöffneten Schalter (9, 15), die oberhalb des Grenzwertes liegt, während regelmäßig auftretender, kurzer Zeitintervalle geöffnet, ansonsten aber geschlossen ist.

2. Schaltungsanordnung nach Anspruch 1, bei der die Steuerschaltung (10, 11; 16 bis 22)
eine Spannungsüberwachungsschaltung (10; 16, 17, 18) zur Erzeugung eines Steuersignals in Abhängigkeit von dem Grenzwert und der Spannung über dem Schalter (9, 15) sowie
eine Impulsgeneratorschaltung (11; 14, 16 bis 22) zum Erzeugen regelmäßig auftretender kurzzeitiger Impulse aufweist, wobei
die Spannungsüberwachungsschaltung (10; 16, 17, 18) und die Impulsgeneratorschaltung (11; 14, 16 bis 22) derart ausgebildet und mit dem Schalter (9, 15) gekoppelt sind, dass der Schalter (9, 15) bei einer Spannung über dem geöffneten Schalter (9, 15), die unterhalb des Grenzwertes liegt, geöffnet ist und bei einer Spannung über dem geöffneten Schalter (9, 15), die oberhalb des Grenzwertes liegt, während regelmäßig auftretender, kurzer Zeitintervalle geöffnet, ansonsten aber geschlossen ist.

3. Schaltungsanordnung nach Anspruch 1 oder 2, bei der
als Energiespeicher ein Hilfsakkumulator (8) und als Ladeeinrichtung eine Schalteinrichtung (7, 10) vorgesehen ist, wobei
die Schalteinrichtung (7, 10) den Hilfsakkumulator (8) zum Laden auf die Batterie (1) aufschaltet, ansonsten aber Batterie (1) und Hilfsakkumulator (8) trennt.

4. Schaltungsanordnung nach Anspruch 1 oder 2, bei der
als Energiespeicher ein Kondensator (14) und als Ladeeinrichtung eine Diode (13) vorgesehen ist, wobei
die Diode (13) derart geschaltet ist, die Diode (13) durchlässig ist, wenn die Spannung über dem Schalter (9) größer ist als die Spannung über dem Kondensator (14), und ansonsten sperrt.

5. Schaltungsanordnung nach Anspruch 4, bei der
die Spannung über dem Schalter (15) unter Zwischenschaltung der Diode (13) ermittelt wird.

6. Schaltungsanordnung nach Anspruch 5, bei der die Steuerschaltung (10, 11; 16 bis 22) aufweist
einen dem Kondensator (14) parallel geschalteten Spannungsteiler (16, 17), mit einem Abgriff,
einen ersten Transistor (20), dessen gesteuerte Strecke zwischen den Steueranschluss des Schalters (15) und einen Anschluss des Kondensators (14) geschaltet ist,
einen zweiten Transistors (18), dessen gesteuerte Strecke zwischen den Steueranschluss des ersten Transistors (20) und den anderen Anschluss des Kondensators (14) geschaltet ist und dessen Steueranschluss mit dem Abgriff des Spannungsteilers (16, 17) verbunden ist und
einen Widerstand (22), der zwischen den Abgriff des Spannungsteilers (16, 17) und den Steueranschluss des Schalters (15) geschaltet ist.

7. Schaltungsanordnung nach einem der vorherigen Ansprüche, bei der als Schalter ein dritter Transistor (9, 15) vorgesehen ist.

8. Schaltungsanordnung nach einem der vorherigen Ansprüche, bei der als Last die Glühlampe (29, 30) mit einem Sockel (29) vorgesehen ist und die in den Sockel (29) einer Glühlampe (29, 30) integriert ist.

9. Schaltungsanordnung nach einem der vorherigen Ansprüche, welche in ein flaches Gehäuse (23) mit einer der Grundfläche des verwendeten Batterietyps entsprechenden Grundfläche eingebaut ist.

10. Schaltungsanordnung nach einem der vorherigen Ansprüche, bei der der Grenzwert von außen einstellbar ist.

11. Schaltungsanordnung nach einem der Ansprüche 1 bis 9, bei der der Grenzwert fest einstellt.

12. Schaltungsanordnung nach einem der Ansprüche 1 bis 9, bei der eine Vorrichtung (12) vorgesehen ist, die den Grenzwert selbstlernend einstellt.

## Claims

1. Circuit arrangement for protecting a battery against deep discharge having
two external terminals (5, 6) for the connection of a battery (1) and a load (3) connected in series therewith,
a controllable switch (9, 15) connected between the two external terminals (5, 6),
a series circuit comprising an energy store (8, 14) and a charging device (7, 13) for the energy store (8, 14), said series circuit being connected between the two external terminals (5, 6) and in parallel with the controllable switch (9, 15), and
a control circuit (11; 16 to 22), which is supplied from the energy store (8, 14), is connected to the switch (9, 15) and serves for generating a control signal in a manner dependent on a limit value and the voltage across the switch (9, 15) in such a way
that the switch (9, 15) is open in the event of a voltage across the open switch (9, 15) which lies below the limit value, and, in the event of a voltage across the open switch (9, 15) which lies above the limit value, is open during regularly occurring, short time intervals but is otherwise closed.

2. Circuit arrangement according to Claim 1,
in which the control circuit (10, 11; 16 to 22) has
a voltage monitoring circuit (10; 16, 17, 18) for generating a control signal in a manner dependent on the limit value and the voltage across the switch (9, 15) and
a pulse generator circuit (11; 14, 16 to 22) for generating regularly occurring, momentary pulses,
in which case
the voltage monitoring circuit (10; 16, 17, 18) and the pulse generator circuit (11; 14, 16 to 22) are designed and coupled to the switch (9, 15) in such a way that the switch (9, 15) is open in the event of a voltage across the open switch (9, 15) which lies below the limit value, and, in the event of a voltage across the open switch (9, 15) which lies above the limit value, is open during regularly occurring, short time intervals but is otherwise closed.

3. Circuit arrangement according to Claim 1 or 2, in which
an auxiliary accumulator (8) is provided as energy store and a switching device (7, 10) is provided as charging device, in which case
the switching device (7, 10) connects the auxiliary accumulator (8) to the battery (1) for charging purposes, but otherwise isolates battery (1) and auxiliary accumulator (8).

4. Circuit arrangement according to Claim 1 or 2, in which
a capacitor (14) is provided as energy store and a diode (13) is provided as charging device, in which case
the diode (13) is connected in such a way that the diode (13) is transmissive if the voltage across the switch (9) is greater than the voltage across the capacitor (14), and is otherwise turned off.

5. Circuit arrangement according to Claim 4, in which the voltage across the switch (15) is determined with interposition of the diode (13).

6. Circuit arrangement according to Claim 5, in which the control circuit (10, 11; 16 to 22) has
a voltage divider (16, 17) connected in parallel with the capacitor (14), with a tap,
a first transistor (20), whose controlled path is connected between the control terminal of the switch (15) and a terminal of the capacitor (14),
a second transistor (18), whose controlled path is connected between the control terminal of the first transistor (20) and the other terminal of the capacitor (14) and whose control terminal is connected to the tap of the voltage divider (16, 17) and
a resistor (22) connected between the tap of the voltage divider (16, 17) and the control terminal of the switch (15).

7. Circuit arrangement according to one of the preceding claims, in which a third transistor (9, 15) is provided as switch.

8. Circuit arrangement according to one of the preceding claims,
in which the incandescent lamp (29, 30) with a base (29) is provided as load and
which is integrated into the base (29) of an incandescent lamp (29, 30).

9. Circuit arrangement according to one of the preceding claims,
which is incorporated into a planar housing (23) with a base area corresponding to the base area of the battery type used.

10. Circuit arrangement according to one of the preceding claims,
in which the limit value can be set externally.

11. Circuit arrangement according to one of Claims 1 to 9,
in which the limit value is set fixedly.

12. Circuit arrangement according to one of Claims 1 to 9,
in which an apparatus (12) is provided, which sets the limit value in a self-learning manner.

## Revendications

1. Montage pour protéger une batterie d'une décharge totale, comprenant
deux bornes (5, 6) extérieures, pour le raccordement d'une batterie (1) et d'une charge (3) montée en série avec celle4s-ci,
un interrupteur (9, 15), qui peut être commandé et qui est monté entre les deux bornes (5, 6) extérieures,
un circuit série, qui est monté entre les deux bornes (5, 6) extérieures et en parallèle à l'interrupteur (9, 15), qui peut être commandé et qui est composé d'un accumulateur (8, 14) d'énergie et d'un dispositif (7, 13) de charge de l'accumulateur (8, 14) d'énergie, et
un circuit (11, 16 à 22) de commande, alimenté par l'accumulateur (8, 14) d'énergie et relié à l'interrupteur (9, 15), pour la production d'un signal de commande en fonction d'une valeur limite et de la tension aux bornes de l'interrupteur (9, 15), de façon
à ce que l'interrupteur (9, 15) soit ouvert, pour une tension aux bornes de l'interrupteur (9, 15) ouvert, qui est inférieure à la valeur limite, et, pour une tension aux bornes de l'interrupteur (9, 15) ouvert, qui est supérieure à la valeur limite, soit ouvert pendant des intervalles de temps courts se produisant régulièrement, mais sinon soit fermé.

2. Montage suivant la revendication 1,
dans lequel le circuit (10, 11, 16 à 22) de commande
a un circuit (10, 16, 17, 18) de contrôle de la tension, pour la production d'un signal de commande en fonction de la valeur limite et de la tension aux bornes de l'interrupteur (9, 15), ainsi qu'
un circuit (11, 14, 16 à 22) de générateur d'impulsions pour la production d'impulsions de courte durée se produisant régulièrement,
le circuit (10, 16, 17, 18) de contrôle de la tension et le circuit (11, 14, 16 à 22) de générateur d'impulsions étant constitués et couplés à l'interrupteur (9, 15) de façon à ce que l'interrupteur (9, 15) soit ouvert, pour une tension aux bornes de l'interrupteur (9, 15) ouvert, qui est inférieure à la valeur limite, et, pour une tension aux bornes de l'interrupteur (9, 15) ouvert, qui est supérieure à la valeur limite, soit ouvert pendant des intervalles de temps courts se produisant régulièrement, mais sinon soit fermé.

3. Montage suivant la revendication 1 ou 2, dans lequel
il est prévu, comme accumulateur d'énergie, un accumulateur (8) auxiliaire et, comme dispositif de charge, un dispositif (7, 10) de commutation, dans lequel
le dispositif (7, 10) de commutation branche l'accumulateur (8) auxiliaire, pour la charge sur la batterie (1), mais sinon sépare la batterie (1) et l'accumulateur (8) auxiliaire.

4. Montage suivant la revendication 1 ou 2, dans lequel
il est prévu, comme accumulateur d'énergie, un condensateur (14) et, comme dispositif de charge, une diode (13), dans lequel
la diode (13) est montée de façon à ce que la diode (13) soit passante, lorsque la tension aux bornes de l'interrupteur (9) est plus élevée que la tension aux bornes du condensateur (14), et sinon bloque.

5. Montage suivant la revendication 4, dans lequel
la tension aux bornes de l'interrupteur (15) est déterminée avec interposition de la diode (13).

6. Montage suivant la revendication 5, dans lequel le circuit (10, 11, 16 à 22) de commande a
un diviseur (16, 17) de tension, qui est monté en parallèle au condensateur (14) et qui a une prise,
un premier transistor (20) dont la section commandée est montée entre la borne de commande de l'interrupteur (15) et un borne du condensateur (14),
un deuxième transistor (18) dont la section commandée est montée entre la borne de commande du premier transistor (20) et l'autre borne du condensateur (14) et dont la borne de commande est reliée à la prise du diviseur (16, 17) de tension, et
une résistance (22), qui est montée entre la prise du diviseur (16, 17) de tension à la borne de commande de l'interrupteur (15).

7. Montage suivant l'une des revendications précédentes, dans lequel il est prévu comme interrupteur un troisième transistor (9, 15).

8. Montage suivant l'une des revendications précédentes, dans lequel il est prévu comme charge la lampe (29, 30) à incandescence ayant un culot (29) et
qui est intégré dans le culot (29) d'une lampe (29, 30) à incandescence.

9. Montage suivant l'une des revendications précédentes, qui est incorporé dans un boîtier (23) ayant une surface de base correspond à une surface de base du type de batterie utilisé.

10. Montage suivant l'une des revendications précédentes, dans lequel la valeur limite peut être réglée de l'extérieur.

11. Montage suivant l'une des revendications 1 à 9,
dans lequel la valeur limite est réglée de manière fixe.

12. Montage suivant l'une des revendications 1 à 9,
dans lequel il est prévu un dispositif (12), qui règle avec autoapprentissage la valeur limite.
